(19) 

Europäisches
Patentamt
European
Patent Office
Office européen
des brevets

(11) **EP 2 245 752 B1**

(12) **EUROPEAN PATENT SPECIFICATION**

(45) Date of publication and mention
of the grant of the patent:
**31.08.2011  Bulletin 2011/35**

(51) Int Cl.:
***H04B 1/707*** *(2011.01)*

(21) Application number: **09714239.2**

(22) Date of filing: **10.02.2009**

(86) International application number:
**PCT/SE2009/050138**

(87) International publication number:
**WO 2009/108110 (03.09.2009 Gazette 2009/36)**

(54) **Scaling factor estimation for code-reuse impairments in MIMO signals**

Skalierungsfaktorschätzung für Behinderungen durch Code-Wiederverwendung bei MIMO-Signalen

Estimation de facteur d'échelle pour des altérations de réutilisation de code dans des signaux MIMO

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **25.02.2008  US 36425**

(43) Date of publication of application:
**03.11.2010  Bulletin 2010/44**

(73) Proprietor: **Telefonaktiebolaget L M Ericsson
(PUBL)
164 83 Stockholm (SE)**

(72) Inventor: **GRANT, Stephen, J.
Pleasanton, CA 94566 (US)**

(74) Representative: **Kühn, Friedrich Heinrich
Ericsson AB
Patent Unit LTE
Torshamnsgatan 23
164 80 Stockholm (SE)**

(56) References cited:
**WO-A-2006/132593     US-A1- 2005 195 889**

**Description**

**FIELD OF THE INVENTION**

The present invention relates generally to wireless communication systems, and in particular to methods for estimating code-reuse interference associated with a received multiple-input multiple-output precoded signal.

**BACKGROUND**

Spread-spectrum communication systems are well known in the art and widely deployed. A class of receivers well suited for use in spread-spectrum systems - such as those standardized in IS-95, IS-2000 (cdma2000), and the 3rd-Generation Partnership Project's (3GPP) Wideband Code-Division Multiple Access (W-CDMA) specifications - is the linear interference-whitening (LIW) receiver. LIW receivers suppress interference in addition to collecting signal energy for detection. One form of the LIW receiver is a transversal chip equalizer; another is a G-Rake receiver. The Rake receiver derives its name from its rake-like structure, wherein multiple receiver "fingers" are used to receive multiple signal images in a received multipath signal. By coherently combining the finger outputs in a weighted Rake combiner, the conventional Rake receiver can use multipath reception to improve the Signal to Interference-plus-Noise Ratio (SINR) of the received signal. A Generalized Rake (G-Rake) receiver improves interference suppression performance over a conventional Rake receiver, using more sophisticated generation of the combining weights.

Recently, 2x2 Multiple-input Multiple-Output (MIMO) technology has been standardized in Release 7 of the 3GPP specifications. The standardized scheme, referred to as Dual-Transmit Adaptive Arrays (D-TxAA), is similar to selective per-antenna rate control (S-PARC), except that adaptive unitary precoding is applied to each of the data streams, in this case to each of one or two High-Speed Downlink Shared Channel (HS-DSCH) data streams.

D-TxAA can be viewed as an extension of the previously standardized closed-loop-mode-1 (CL-1) transmit diversity scheme, in that the precoding vectors (which map a data stream to the multiple transmit antennas) used for each of the D-TxAA data streams are selected from the same codebook used for CL-1. In contrast to CL-1, however, D-TxAA includes two modes of operation - single-stream mode and dual-stream mode. In single-stream mode, one of the four possible precoding vectors from the CL-1 codebook is applied to a single data stream. In dual-stream mode, orthogonal pairs of precoding vectors (again selected from the CL-1 codebook) are applied to the two data streams. The use of preceding has a significant impact on the receiver, and in particular complicates the design of LIW receivers such as Rake receivers.

In a co-pending patent application titled "Receiver Parametric Covariance Estimation for Precoded MIMO Transmissions," U.S. Patent Application Serial No. 12/036,323 (the "Grant" application), a MIMO G-Rake receiver operating at the symbol level is disclosed that is based upon the most general G-Rake formulation for MIMO. For a 2x2 MIMO scenario, this receiver computes impairment covariance matrices corresponding to the first and second streams of a dual-stream precoded signal as:

$$\mathbf{R}_{stream1} = \mathbf{R} + \alpha_{PC}(2)\mathbf{h}_{eff}(\mathbf{b}_2)\mathbf{h}_{eff}^{H}(\mathbf{b}_2) \qquad (1)$$

and

$$\mathbf{R}_{stream2} = \mathbf{R} + \alpha_{PC}(1)\mathbf{h}_{eff}(\mathbf{b}_1)\mathbf{h}_{eff}^{H}(\mathbf{b}_1). \qquad (2)$$

Here, R is that portion of the impairment covariance not including the code-reuse interference. In other words, R captures impairment covariance arising from inter-symbol interference (ISI), multiple access interference (MAI), and noise. The second term in each expression is the code-reuse interference term.

In equations (1) and (2), the code-reuse interference term is a function of the effective net response corresponding to the interfering stream. For stream 1, for example, the interfering stream is stream 2, and the code-reuse term is a function of $h_{eff}(b_2)$; for stream 2, the interfering stream is stream 1, and the code-reuse term is a function of $h_{eff}(b_1)$. The vectors $b_1$ and $b_2$ are the precoding vectors applied to streams 1 and 2, respectively.

More particularly, if n indexes data streams, then the effective net response vector corresponding to the $n^{th}$ stream is given by:

$$\mathbf{h}_{\text{eff}}\left(\mathbf{b}_n\right) = b_{1n}\mathbf{h}_1 + b_{2n}\sqrt{\frac{\gamma_p(1)}{\gamma_p(2)}}\mathbf{h}_2, \qquad\qquad (3)$$

where $b_n = [b_{1n}\ b_{2n}]^T$ is the precoding vector applied to the $n^{\text{th}}$ data stream. The vector $\mathbf{h}_m$ is the net channel response associated with the $m^{\text{th}}$ transmit antenna ($m$ = 1 or 2). Each element of the net response vector $\mathbf{h}_m$ corresponds to a given Rake finger. For example, for finger f (associated with delay $d_f$ and receive antenna $l$), the corresponding net channel response vector element is given by:

$$h_m(f) = \sum_{p=0}^{P-1} g_m(p,l)R_{TX/RX}\left(d_f - \tau_p\right). \qquad\qquad (4)$$

where $P$ is the number of paths, $g_m(p,l)$ is the channel estimate (medium response) associated with transmit antenna $m$, receive antenna $l$ and path delay $\tau_p$, and $R_{TX/RX}(\tau)$ represents the convolution of the transmit and receive pulse shaping filters.

In equations (1) and (2), the code-reuse terms include a scaling factor, $\alpha_{PC}(n)$, representing the per-code energy allocated to interfering stream $n$. Assuming uniform power distribution across channelization codes, the per-code energy for the $n^{\text{th}}$ stream is given by:

$$\alpha_{PC}(n) = \left(\frac{1}{\gamma_p(1)N_p}\right)\left(\frac{N_s}{K}\right)\gamma_d(n)\Gamma_{D/P}. \qquad\qquad (5)$$

Here, K is the number of channelization codes used for each data stream (and is the same for each stream) and $\Gamma_{D/P}$ is the ratio of the power allocated to the data channel (in the W-CDMA specifications, the High-Speed Downlink Shared Channel, or HS-DSCH) to the total power allocated to the pilot channels (in W-CDMA, the Common Pilot Channel, or CPICH). The quantity $\gamma_d(n)$ denotes the fraction of the total data power allocated to the $n^{\text{th}}$ data stream, and $\gamma_p(1)$ denotes the fraction of the total pilot power allocated to the first transmit antenna. The quantities $N_s$ and $N_p$ represent the spreading factors used for the data channel (typically sixteen) and the pilot channel (typically 256), respectively.

Given the preceding construction, the per-code energies $\alpha_{PC}(1)$ and $\alpha_{PC}(2)$ are needed by a receiver to compute the stream-specific covariance matrices $R_{\text{stream1}}$ and $R_{\text{stream2}}$. Typically, all of the quantities in equation (5) are known to the receiver, with the possible exception of the data-to-pilot power ratio $\Gamma_{D/P}$. In the UMTS specifications, a provision exists for explicit signaling of the data-to-pilot power ratio. In this case, a mobile station may simply obtain a value for $\Gamma_{D/P}$ via a downlink control channel, and compute the per-code energies $\alpha_{PC}(n)$ directly, using equation (5). Another possible approach, where a value for $\Gamma_{D/P}$ cannot be obtained by signaling, is to simply use a pre-determined, nominal value for $\Gamma_{D/P}$. However, both of these approaches suffer in accuracy. In the first case, a value for $\Gamma_{D/P}$ obtained by explicit signaling can rapidly become out of date, since specifications currently call for signaling $\Gamma_{D/P}$ on an infrequent basis. In the second case, the computed values for $\Gamma_{D/P}$ may be very inaccurate when the actual data-to-pilot ratio strays significantly from the nominal, "assumed" value. Hence, methods for estimating per-code energies $\alpha_{PC}(n)$, or alternatively, for estimating a value for $\Gamma_{D/P}$ in order to facilitate calculation of the per-code energies, are needed. WO 2006132593 discloses a method for improving signal impairment correlation estimation.

## SUMMARY

Disclosed herein are methods and apparatus according to claims 1 & 7 and for estimating code-reuse interference associated with a received multi-stream multiple-input multiple-output (MIMO) signal. Per-code energy associated with each of the transmitted data streams may be estimated based on de-spread values of the traffic channel. The code-reuse interference associated with each stream is a function of the per-code energy and an effective net channel response corresponding to that stream.

Accordingly, in an exemplary method, impairment covariance associated with the received multi-stream MIMO signal is measured, and first and second sets of samples for received traffic data symbols are collected, using first and second sets of RAKE combining weights corresponding to effective net channel responses for first and second streams of the multi-stream MIMO signal, respectively. A per-code energy value for at least one stream of the received multi-stream MIMO signal is computed, as a function of the measured impairment covariance, the effective net channel responses for the first and second streams, and the first and second sets of samples. Finally, code-reuse interference associated with the first stream is calculated, as a function of the per-code energy value and the effective net channel response corresponding to the first stream.

Another embodiment of the present invention relates to a wireless communication receiver for use in a mobile terminal in a wireless communication system employing multi-stream MIMO signals. The receiver includes a radio front-end circuit configured to provide a received signal of interest and processing circuitry configured to carry out one or more of the methods described herein for estimating code-reuse interference.

## BRIEF DESCRIPTION OF THE DRAWINGS

Figure 1 is a functional block diagram of a wireless communication system.
Figure 2 is a functional block diagram of an exemplary symbol-level LIW receiver configured to process received signals transmitted from at least first and second transmit antennas.
Figure 3 is a functional block diagram of an exemplary chip-level LIW receiver configured to process received signals transmitted from at least first and second transmit antennas.
Figure 4 is a block diagram illustrating the composition of a transmitted signal.
Figure 5 is a flow diagram of an exemplary method of estimating code-reuse interference associated with a received multi-stream MIMO signal.

## DETAILED DESCRIPTION

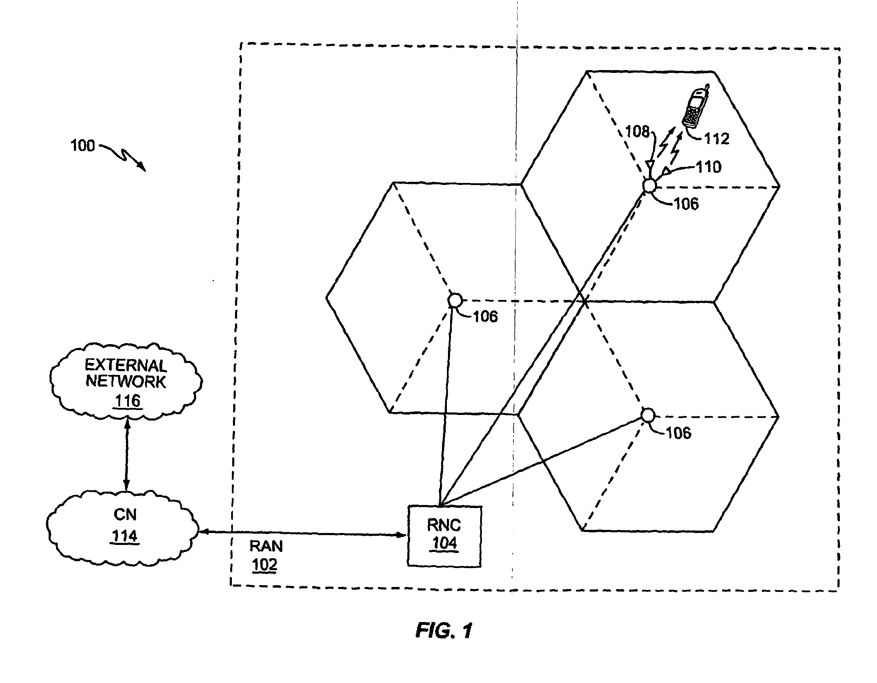

Figure 1 depicts an exemplary wireless communication system 100 employing multiple-input multiple-output (MIMO) transmissions, such as according to the D-TxAA specifications. Within a Radio Access Network (RAN) 102, a Radio Network Controller (RNC) 104 controls a plurality of base transceiver stations (BTS) 106, also known in the art as Node B's. Each Node B 106 provides radio communication services with subscriber mobile terminals 112 within a geographic area called a cell, which may be divided into sectors, as depicted in Figure 1. The RNC 104 communicates with a Core Network (CN) 114, which in turn is connected to one or more external networks 116, such as the Public Switched Telephone Network (PSTN), the Internet, or the like.

Embodiments of the present invention are described herein with respect to WCDMA standards, including the specifications for D-TxAA, which is more fully described below. However, the invention is not so limited, and the inventive concepts disclosed and claimed herein may be advantageously applied to a wide array of transmit diversity systems.

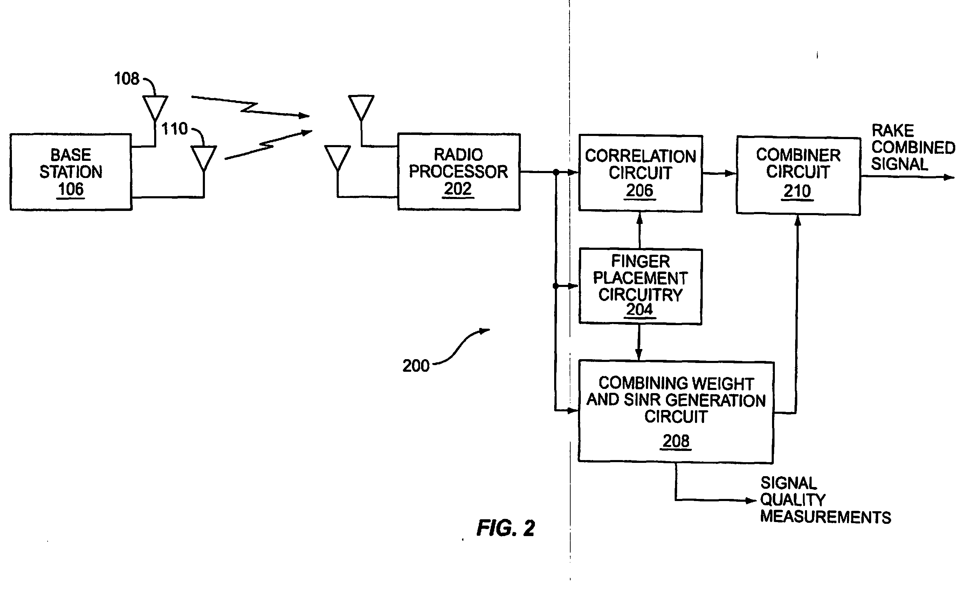

Each base station 106 includes at least a primary transmit antenna 108 and a secondary transmit antenna 110 (either per-cell or per-sector, depending on the network 100 configuration), as shown in Figure 2. The base station 106 may transmit an information signal, such as a precoded voice signal or a precoded High-Speed Downlink Packet Access (HSDPA) data signal, using both antennas 108 and 110. The signal transmitted on the secondary antenna 110 is weighted relative to the signal transmitted on the primary antenna 108, wherein the transmit weights may comprise phase offset only, or may more generally comprise a complex quantity having both phase and amplitude. The phase shift employed may be determined by feedback from the mobile terminal 112, thus forming a closed-loop transmit diversity system.

There are two main types of LIW receiver architectures. One uses symbol-level equalization, which is typically based on maximum likelihood estimation techniques. This type of receiver includes the G-Rake receiver 200, illustrated in block diagram form in Figure 2. Radio processor 202 generates chip samples from a received signal, which includes the information signal transmitted from antennas 108 and 110 at base station 106. The chip samples are provided to a finger placement circuit 204, which determines the "finger delays," usually including multipath delays, used to de-spread a received CDMA signal in a correlation unit 206. The finger delays are also provided to a weight computer 208 that computes combining weights which are used to combine the de-spread values in a combiner 210 to produce soft values, or estimates of the symbol values.

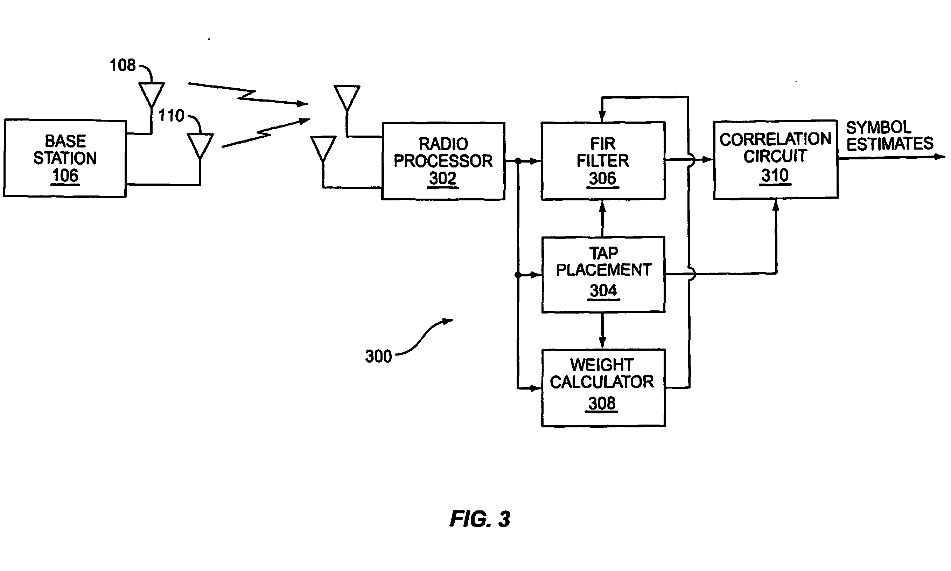

Another type of LIW receiver is a chip-level equalizer, which typically includes Minimum Mean-Square Error (MMSE) transversal chip equalization 300, as illustrated in block diagram form in Figure 3. A radio processor 302 generates chip samples from a received signal. The chip samples are provided to a tap placement circuit 304, which determines the tap delays, related to multipath delays, for a Finite Impulse Response (FIR) filter 306. The selected tap delays are also provided to a weight calculator 308 that computes filter coefficients (or weights) for the FIR filter 306. The FIR filter 306 filters the chip samples to produce a signal that is de-spread by a correlator 310 to produce symbol estimates.

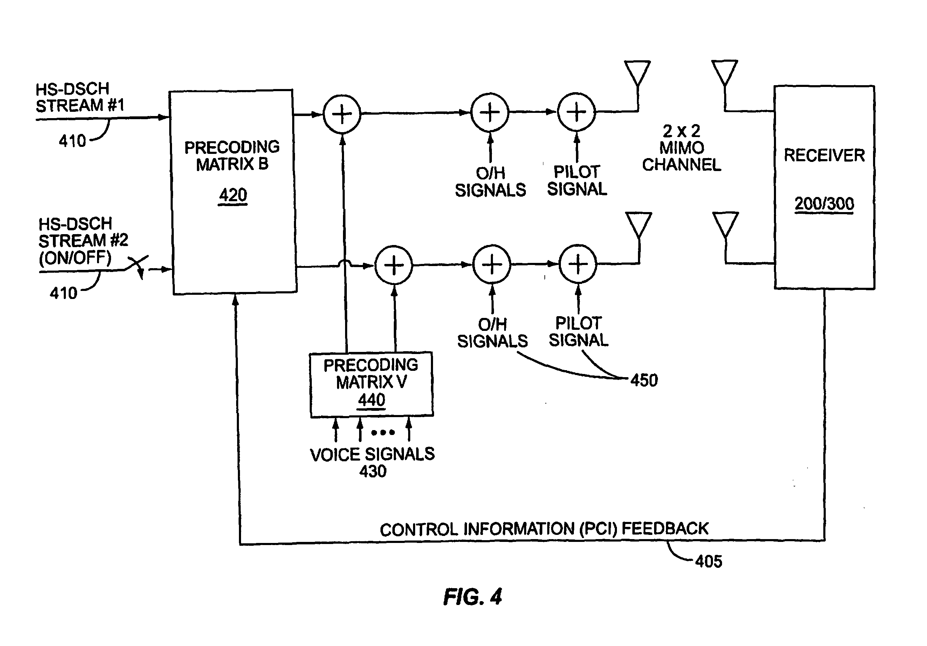

In order to provide context for a detailed discussion of impairment models, additional background of the D-TxAA MIMO scheme standardized by 3GPP in Release-7 High-Speed Packet Access (HSPA) specifications is provided here. A high-level view of the scheme is shown in Figure 4. In Release-6 (non-MIMO) HSPA, the theoretical maximum downlink data rate is 14.4 Mbps, which is achieved using 15 codes, 16-QAM, and coding rate 1. With D-TxAA, this peak rate may be doubled to 28.8 Mbps by transmitting a second, separately encoded data stream in parallel when channel conditions warrant. Typically, this occurs at high signal-to-noise ratios (SNRs) and when the channel is full rank. In rank-deficient scenarios and/or at lower SNRs, the second data stream may be switched off, as indicated in the figure, so that only a single data HSPA data stream is transmitted.

D-TxAA uses a form of unitary precoding applied to the HS-DSCH data streams using the precoding weight matrix B. The weight vectors (columns of B) applied to each stream are drawn from the same codebook of four phase-only weights used for the closed-loop mode-1 (CL-1) transmit diversity option defined in Release 99 of the 3GPP specifications:

$$\mathbf{u}_i = \frac{1}{\sqrt{2}}\begin{bmatrix} 1 \\ e^{j\frac{\pi}{4}(2i-1)} \end{bmatrix}, \quad i = 1, 2, 3, 4. \tag{6}$$

Those skilled in the art will appreciate that while phase-only weights are used in D-TxAA as currently standardized, MIMO transmission more generally may use amplitude weighting as well. Further, the codebook from which the weight vectors are drawn is by no means limited to four entries.

In any event, for the case of single-stream D-TxAA transmission, the weight vector is a single one of the four possible vectors in the CL-1 codebook. For the case of dual-stream transmission, the two used weight vectors are selected to be orthogonal; hence, B is unitary. With respect to the CL-1 codebook as defined in Equation (1), the orthogonal pairings are thus (1,3) and (2,4) and permutations thereof.

With this structure, there are fundamentally eight different transmitter modes corresponding to the different choices for B and the different modes - 4 single-stream modes and 4 dual-stream modes. The single-stream modes are defined by

$$\mathbf{B} \in \left\{ \begin{bmatrix} \mathbf{u}_1 & 0 \end{bmatrix}, \begin{bmatrix} \mathbf{u}_2 & 0 \end{bmatrix}, \begin{bmatrix} \mathbf{u}_3 & 0 \end{bmatrix}, \begin{bmatrix} \mathbf{u}_4 & 0 \end{bmatrix} \right\}, \tag{7}$$

and the dual-stream modes by

$$\mathbf{B} \in \left\{ \begin{bmatrix} \mathbf{u}_1 & \mathbf{u}_3 \end{bmatrix}, \begin{bmatrix} \mathbf{u}_2 & \mathbf{u}_4 \end{bmatrix}, \begin{bmatrix} \mathbf{u}_3 & \mathbf{u}_1 \end{bmatrix}, \begin{bmatrix} \mathbf{u}_4 & \mathbf{u}_2 \end{bmatrix} \right\}. \tag{8}$$

A selection of the "best" transmitter mode is made by the user equipment (UE) through maximizing some metric such as data rate, SINR, received power per-stream, or the like. The UE indicates its preferred precoding configuration through feedback, called preceding control information (PCI), transmitted to the Node B on the high-speed dedicated physical control channel (HS-DPCCH), as shown in Figure 4. The PCI feedback 405 informs the scheduler in the Node B of the preferred number of data streams and the preferred precoding weight vector(s). The Node B signals the actually used precoding matrix B , as well as the actually transmitted number of streams, on the downlink high-speed shared control channel (HS-SCCH). This information is used to configure the receiver in the UE.

As can be seen in Figure 4, a number of different signals form the composite transmitted signal on each antenna. These include the following: the one or two high-speed downlink shared channel (HS-DSCH) data streams 410 which are precoded, using matrix B, at block 420; a number of dedicated channel signals (e.g., voice and/or control), including voice signals 430, which may be configured using CL-1 transmit diversity using the matrix V at block 440; and a number of other overhead signals 450 (e.g., pilots, voice, control, etc.) that are not precoded. The precoding matrix V is given by

$$\mathbf{V} = \begin{bmatrix} \mathbf{v}_1 & \mathbf{v}_2 & \cdots & \mathbf{v}_{K_r} \end{bmatrix}, \tag{9}$$

where $K_r$ is the number of dedicated channels configured in CL-1 transmit diversity. Each precoding vector (column of V) is given by one of the 4 possible vectors in the CL-1 codebook.

It is important to note that when the transmitter is configured in dual-stream mode, the same set of channelization (spreading) codes is used for both streams. This creates self-interference that must be resolved by the receiver. In other words, when the receiver demodulates each stream, it must suppress cross-stream interference from the other stream.

As discussed above, per-code energy quantities $\alpha_{PC}(1)$ and $\alpha_{PC}(2)$ are needed to accurately characterize (or estimate) stream-specific signal impairments for a dual-stream MIMO signal. Furthermore, these per-code energy quantities may be directly computed, using equation (5), if a value for the data-to-pilop power ratio is known. In the co-pending application U.S. Serial No. 12/036,368. an approach to estimating values for $\alpha_{PC}(1)$ and $\alpha_{PC}(2)$ is disclosed in which an estimate of $\Gamma_{DIP}$ is first obtained. This estimate is obtained as a byproduct of a parametric construction of R , which appears in both equations (1) and (2). In one embodiment of this approach, a least-squares estimation of fitting parameters relies upon de-spread values of pilot channel symbols, from which a measured value of R is obtained.

In contrast, the approach for per-code energy estimation disclosed here is based on de-spread values of traffic channel data, rather than from pilot channel symbols. This approach is applicable to a wider variety of transmitter precoding configurations and power-allocation scenarios. In this approach, estimates of the per-code energies $\alpha_{PC}(1)$ and $\alpha_{PC}(2)$ may be obtained directly by solving a different system of equations based on Rake-combined values of a single de-spread traffic (i.e., data) code.

A first and second set of Rake combining weights may be defined according to:

$$\mathbf{w}_1 = \mathbf{h}_{eff}(\mathbf{b}_1)$$
$$\mathbf{w}_2 = \mathbf{h}_{eff}(\mathbf{b}_2)$$
(10)

Those skilled in the art will appreciate that these differ from G-Rake combining weights in that they do not depend on estimated signal impairments, such as the impairment covariance matrices $R_{stream1}$ and $R_{stream2}$, and are therefore not interference-suppressing combining weights. Optimal G-Rake combining weights, in contrast, depend upon accurate estimates of $R_{stream1}$ and $R_{stream2}$, which depend on the as yet unknown per-code energies $\alpha_{PC}(1)$ and $\alpha_{PC}(2)$. However, these Rake combining weights, like the desired G-Rake weights, depend on the effective net channel responses $h_{eff}(b_1)$ and $h_{eff}(b_2)$. Those skilled in the art will thus appreciate that forming these Rake weights, which are not directly applicable to demodulating the received signals, does not require any additional computation efforts, since the effective net responses need to be constructed anyway in the process of computing the G-Rake weights.

The analytical expression for the vector y (i) of de-spread values of the traffic code is given by:

$$\mathbf{y}(i) = \sqrt{\alpha_{PC}(1)}\mathbf{h}_{eff, true}(\mathbf{b}_1)c_1(i) + \sqrt{\alpha_{PC}(2)}\mathbf{h}_{eff, true}(\mathbf{b}_2)c_2(i) + \mathbf{u}(i),$$
(11)

where $c_1(i)$ and $c_2(i)$ are the traffic (data) symbols corresponding to streams 1 and 2, respectively, and the vector u(i) is a sample of the impairment process which has covariance matrix $R_{true}$. The notations $h_{eff, true}(b_1)$ and $h_{eff, true}(b_2)$ for the effective net responses and $R_{true}$ for the impairment covariance matrix are used to emphasize that these are *true* values of the various quantities. In other words, this exact formulation of y(i) depends on true values of the channel, rather than channel estimates, and true values of the scaling parameters, rather than the least-squares estimates. Those skilled in the art will appreciate that these true values are not observable at the receiver; they are used here only to describe the estimation approach.

Assuming spreading factor 16 is used for the HS-DSCH data codes, there are 160 data symbols per slot, hence $i \in \{0...159\}$. Again, those skilled in the art will appreciate that the process of collecting de-spread values for traffic data symbols does not impose an additional computational upon the receiver; the de-spread values of this traffic code are generally available to the receiver in any case, since these values will ultimately be combined, using G-Rake combining weights, to suppress interference.

Two sets of Rake-combined values for the traffic code may be generated according to:

$$z_1(i) = \mathbf{w}_1^H \mathbf{y}(i)$$
$$z_2(i) = \mathbf{w}_2^H \mathbf{y}(i)$$
(12)

Rake combining of this traffic code, as described here, is only an intermediate step for the purposes of per-code energy estimation.

Assuming that the traffic symbols have unity average squared magnitude, then the true variances $\sigma^2_{1,true}$ and

$\sigma^2_{2,true}$ of the Rake-combined values $z_1$ *(i)* and $z_2$ *(i)* are given by:

$$\sigma^2_{1,true} = E\left[\left|z_1(i)\right|^2\right]$$
$$= \alpha_{PC}(1)\left|\mathbf{w}_1^H \mathbf{h}_{eff,true}(\mathbf{b}_1)\right|^2 + \alpha_{PC}(2)\left|\mathbf{w}_1^H \mathbf{h}_{eff,true}(\mathbf{b}_2)\right|^2 + \mathbf{w}_1^H \mathbf{R}_{true} \mathbf{w}_1,$$
$$\sigma^2_{2,true} = E\left[\left|z_2(i)\right|^2\right]$$
$$= \alpha_{PC}(1)\left|\mathbf{w}_2^H \mathbf{h}_{eff,true}(\mathbf{b}_1)\right|^2 + \alpha_{PC}(2)\left|\mathbf{w}_2^H \mathbf{h}_{eff,true}(\mathbf{b}_2)\right|^2 + \mathbf{w}_2^H \mathbf{R}_{true} \mathbf{w}_2 \tag{13}$$

Sample variances, i.e., variances corresponding to the two sets of Rake-combined traffic code values $z_1$ *(i)* and $z_2$ *(i)* may be obtained according to:

$$\sigma^2_1 = \frac{1}{N-1}\sum_{i=0}^{N-1}\left|z_1(i)\right|^2$$
$$\sigma^2_2 = \frac{1}{N-1}\sum_{i=0}^{N-1}\left|z_2(i)\right|^2 \tag{14}$$

where $N$ is the number of traffic symbols per slot (e.g., $N = 160$, assuming a spreading factor of sixteen for the high-speed downlink shared control channel).

If the "true" variances in equation (13) are replaced by the sample variances $\sigma^2_1$ and $\sigma^2_{2\text{-}}$, and if the "true" values of the various quantities on the right-hand side are replaced by corresponding estimated or measured values, then the following system of equations in the two unknowns $\alpha_{PC}(1)$ and $\alpha_{PC}(2)$ is obtained:

$$\begin{bmatrix} \left|\mathbf{w}_1^H \mathbf{h}_{eff}(\mathbf{b}_1)\right|^2 & \left|\mathbf{w}_1^H \mathbf{h}_{eff}(\mathbf{b}_2)\right|^2 \\ \left|\mathbf{w}_2^H \mathbf{h}_{eff}(\mathbf{b}_1)\right|^2 & \left|\mathbf{w}_2^H \mathbf{h}_{eff}(\mathbf{b}_2)\right|^2 \end{bmatrix} \begin{bmatrix} \alpha_{PC}(1) \\ \alpha_{PC}(2) \end{bmatrix} = \begin{bmatrix} \sigma^2_1 - \mathbf{w}_1^H \hat{\mathbf{R}} \mathbf{w}_1 \\ \sigma^2_2 - \mathbf{w}_2^H \hat{\mathbf{R}} \mathbf{w}_2 \end{bmatrix}. \tag{15}$$

Solving the system of equations in equation (15) immediately yields the desired estimates of the per-code energies $\alpha_{PC}(1)$ and $\alpha_{PC}(2)$.

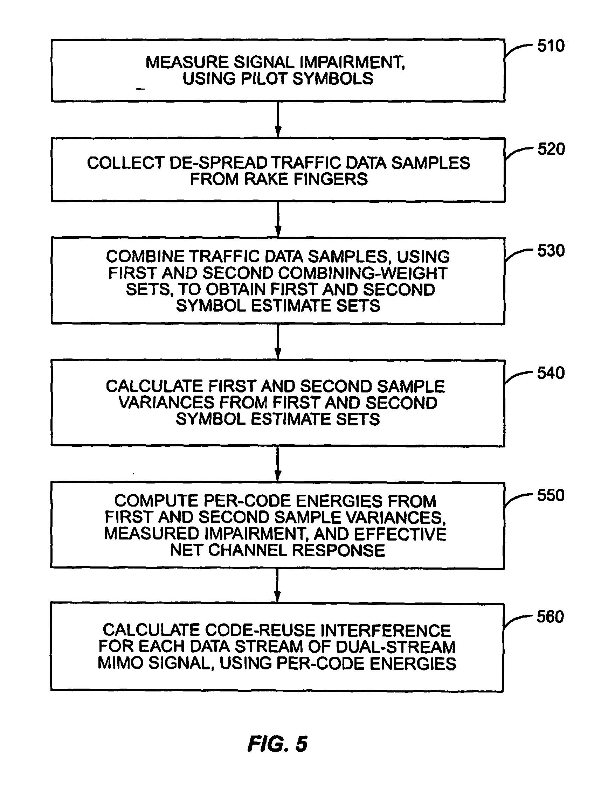

Figure 5 thus illustrates a method for estimating code-reuse interference associated with a received multi-stream MIMO signal, based on the above analysis. Those skilled in the art will appreciate that the techniques disclosed below, while described in terms of a dual-stream, precoded MIMO signal, may be readily extended to cover other multi-stream MIMO signals.

At block 510, impairment covariance associated with the received signal is measured, to provide an up-to-date sample of the signal impairments. In one or more embodiments, a G-Rake receiver is configured to perform impairment covariance measurements using pilot channel data. For instance, the measured impairment covariance can be obtained through the following approach, assuming the so-called "diversity pilot scheme" defined in the standard is utilized. First, the measured net response corresponding to each transmit antenna is computed as:

$$\hat{\mathbf{h}}_A = \frac{1}{N}\sum_{n=0}^{N-1}\mathbf{x}_p(n)s_A^*(n). \tag{16}$$

Here $\mathbf{x}_p$ *(n)* is a vector of de-spread pilot symbols for the *n*th super-symbol in a slot (vector elements correspond to finger outputs), where de-spreading is performed over 512 chips (two pilot symbol periods); $s_A(n)$ is the *n*th pilot super-symbol corresponding to transmit antenna $A$ ( $A = 1$ or $A = 2$); and $N = 5$ is the number of pilot super-symbols per slot.

For the first antenna, the pilot super-symbols are given simply by $s_1(n) = \dfrac{1}{\sqrt{2}}(1+j)$, for all *n*. For the second antenna, the pilot super-symbols are given by $s_2(n) = \dfrac{1}{\sqrt{2}}(1+j)(-1)^{n+i}$ where *i* = 0...14 indexes the 15 slots within each WCDMA radio frame.

Next, the measured impairment covariance corresponding to each transmit antenna is computed, according to:

$$\hat{\mathbf{R}}_A = \frac{1}{N-1}\sum_{n=0}^{N-1}\left(\mathbf{x}_p(n)s_A^*(n)-\hat{\mathbf{h}}_A\right)\left(\mathbf{x}_p(n)s_A^*(n)-\hat{\mathbf{h}}_A\right)^H. \tag{17}$$

Finally, the overall measured impairment covariance matrix (excluding code-reuse) is computed:

$$\hat{\mathbf{R}} = \hat{\mathbf{R}}_1 + \hat{\mathbf{R}}_2. \tag{18}$$

At block 520, traffic data samples comprising a vector of de-spread values for each of several symbol periods are collected for a single traffic code. In one embodiment, vectors of de-spread values are collected for all symbol periods in a slot, (e.g., (y*(i)*) for i ∈ {0...159}). At block 530, these traffic data samples are combined, using two sets of combining weights corresponding to effective net channel responses $h_{eff}$ ($b_n$) for each of the streams of the dual-stream signal. This combining process yields two sets of symbol estimates, e.g., $z_1(i)$ and $z_2(i)$ as formulated above at equation (12).

At block 540, first and second sample variances ($\sigma_1^2$ and $\sigma_2^2$) corresponding to the two sets of symbol estimates are calculated. Next, at block 550, per-code energies $\alpha_{PC}$ (1) and $\alpha_{PC}$ (2) are computed, using the first and second sample variances, the measured impairment covariance, and the effective net channel responses $h_{eff}$ ($b_n$).

Finally, the stream-specific per-code energies may be used at block 560 to compute an estimate for code-reuse interference associated with each stream:

$$\begin{aligned}\mathbf{R}_{reuse1} &= \alpha_{PC}(1)\mathbf{h}_{eff}(\mathbf{b}_1)\mathbf{h}_{eff}^H(\mathbf{b}_1)\\ \mathbf{R}_{reuse2} &= \alpha_{PC}(2)\mathbf{h}_{eff}(\mathbf{b}_2)\mathbf{h}_{eff}^H(\mathbf{b}_2)\end{aligned}, \tag{19}$$

where $R_{reuse1}$ represents the interference from the first stream (to the second stream) and $R_{reuse2}$ represents the interference from the second stream.

The stream-specific code-reuse interference may then be used to estimate overall stream-specific impairment according to equations (1) and (2):

$$\begin{aligned}\mathbf{R}_{stream1} &= \mathbf{R} + \mathbf{R}_{reuse2}\\ \mathbf{R}_{stream2} &= \mathbf{R} + \mathbf{R}_{reuse1}\end{aligned}. \tag{20}$$

Thus, the code-reuse interference from stream 2 forms part of the overall stream-specific specific signal impairments for stream 1, and vice versa. Those skilled in the art will appreciate that this approach may be readily extended to signals including more than two streams.

Those skilled in the art will further appreciate that the stream-specific impairment estimates calculated according to the above techniques may be used for several purposes, such as for computing interference-suppressing combining weights for detecting and demodulating the transmitting data streams. The estimated impairment covariance may also be used, for example, to estimate channel equality, i.e., to estimate or predict signal-to-noise-plus-interference or other channel quality metric.

Although described above in the context of symbol-level (G-Rake) LIW receivers, the disclosed techniques are also applicable to chip-level (chip-equalizer) LIW receivers. Like the G-Rake receiver, a chip-equalizer LIW receiver may be configured to suppress interference from various sources, including code-reuse interference in a MIMO signal. Those skilled in the art will appreciate that the equalizer weights of a chip equalizer are directly analogous to the combining weights of a RAKE receiver; both types of processing weights may be computed to suppress interference based on an estimate of signal impairments.

Accordingly, a similar procedure to that described in Figure 5 may be carried out for a chip-equalizer receiver. Impairment covariance or data covariance associated with the received mufti-stream MIMO signal may be measured, using conventional techniques, to obtain, for example, a single-slot estimate of the impairment covariance. Two sets of processing weights, in this case equalizer weights, are computed, as a function of the effective net channel response for each stream of a dual-stream MIMO signal. In the most direct analogue to the G-Rake embodiment described above, these equalizer weights are not interference-suppressing weights. The two sets of equalizer weights are then applied separately to the received signal, and the results de-spread to obtain two sets of samples, each set including samples corresponding to multiple (e.g., an entire slot of) traffic data symbols. The variance of each set of samples may be computed, e.g., according to equation (14). Finally, estimates for per-code energies for the first and second streams may be computed, using a system of equations derived in an analogous manner to that described above for equation (15).

Embodiments of the present invention thus provide methods for estimating code-reuse interference associated with a received multi-stream multiple-input multiple-output (MIMO) signal. Those skilled in the art will appreciate that the particular design of a LIW receiver in accordance with the inventive techniques, and the associated nomenclature used in connection with such a receiver, may vary according to the network standard involved or the architecture of such a receiver, but such variations are not germane to understanding or explaining the present invention. Moreover, it should be understood that the networks and radio devices illustrated and discussed herein are simplified; actual implementations likely will have additional entities omitted herein for clarity.

Nevertheless, an exemplary mobile terminal 112 includes one or both of the exemplary receiver circuits 200 or 300, illustrated in Figures 2 and 3, respectively. These receiver circuits may be implemented using various processing circuits, including A/D converters, filters, DSPs or other digital processors, memory, and the like. In at least one exemplary embodiment, mobile terminal 112 includes one or more DSPs and/or Application Specific Integrated Circuits (ASICS) or other programmable devices to implement receiver 112, including a GRake receiver as illustrated in Figure 2. The processing circuits may be configured to include processing logic to carry out one or more of the methods described herein. It should thus be understood that at least a portion of the present invention's functionality may be embodied as stored computer instructions in the form of micro-code, firmware, software, etc.

More generally, the present invention can be implemented in hardware, software, or essentially any combination thereof, according to the needs of a particular design. Although the present invention has been described herein with respect to particular features, aspects and embodiments thereof, it will be apparent that numerous variations, modifications, and other embodiments are possible within the broad scope of the present invention, and accordingly, all variations, modifications and embodiments are to be regarded as being within the scope of the invention. The present embodiments are therefore to be construed in all aspects as illustrative and not restrictive and all changes coming within the meaning and equivalency range of the appended claims are intended to be embraced therein.

**Claims**

1. A method of estimating a scaling factor in a received multi stream multiple-input multiple-output (MIMO) signal for one or more streams of the received multi-stream MIMO signal, the method comprising measuring (510) impairment covariance associated with the received multi-stream MIMO signal, **characterized in that** the method further comprises:

    collecting(520) a set of samples, which set includes a plurality of samples corresponding to received traffic data symbols,
    combining (530) the set of samples using first and second sets of processing weights corresponding to effective net channel responses for first and second streams of the multi-stream MIMO signal, respectively that yields two sets of symbol estimates;
    calculating(540) first and second sample variances corresponding to the two sets of symbol estimates, and
    computing (550) a first scaling factor for the first stream of the received multi-stream MIMO signal, as a function of the measured impairment covariance, the effective net channel responses for the first and second streams, and the first and second sample variances.

2. The method of claim 1, **characterized in that** the processing weights are Rake combining weights, and further **characterized in that** collecting the set of samples comprises:

collecting (520) a vector of de-spread values for each of a plurality of traffic data symbols; and
combining (530) said vectors using the first set of processing weights to obtain the first set of symbol estimate and combining said vectors using the second set of processing weights to obtain the second set of symbol estimates.

**3.** The method of claim 1, **characterized in that** the processing weights are chip equalizer weights, and wherein collecting the set of samples comprises, for each set of samples, de-spreading chip samples equalized according to the corresponding set of equalizer weights for a plurality of traffic data symbols.

**4.** The method of claim 1, wherein measuring impairment covariance associated with the received multi-stream MIMO signal comprises calculating (510) the measured impairment covariance from a plurality of de-spread pilot symbol values.

**5.** A method for calculating (560) code-reuse interference associated with a first stream of a received multi stream MIMO signal as a function of a scaling factor and an effective net channel response corresponding to the first stream **characterized in that** the scaling factor has been estimated according to any of the claims 1-4.

**6.** The method of claim 5, **characterized in that** the method further comprises:

computing (550) a second scaling factor for a second stream of the received multi-stream MIMO signal, as a function of the measured impairment covariance, the effective net channel responses for the first and second streams, and the first and second sample variances; and
calculating (560) code-reuse interference associated with said second stream as a function of the second scaling factor and the effective net channel response corresponding to the second stream.

**7.** A wireless communication receiver (200,300), comprising a radio front-end circuit (202, 302) configured to receive a multi-stream multiple-input multiple-output (MIMO) signal and one or more processing circuits configured to measure impairment covariance associated with the received multi-stream MIMO signal, **characterized in that** the one or more processing circuits are further configured to:

collect a set of samples for received traffic data symbols, which set includes a plurality of samples corresponding to received traffic data symbols,
combine the set of samples by using first and second sets of processing weights corresponding to effective net channel responses for first and second streams of the multi-stream MIMO signal, respectively, yielding two sets of symbol estimates;
calculate first and second sample variances corresponding to the two sets of symbol estimates; and
compute a first scaling factor for the first stream of the received multi-stream MIMO signal, as a function of the measured impairment covariance, the effective net channel responses for the first and second streams, and the first and second sample variances.

**8.** The wireless communication receiver (200,300) of claim 7, **characterized in that** the processing weights are Rake combining weights, and further **characterized in that** the one or more processing circuits are configured to collect the set of samples by:

collecting a vector of de-spread values for each of a plurality of traffic data symbols; and
combining said vectors using the first set of RAKE combining weights to obtain the first set of samples and combining said vectors using the second set of RAKE combining weights to obtain the second set of samples.

**9.** The wireless communication receiver (200,300) of claim 7, **characterized in that** the processing weights are chip equalizer weights, and further **characterized in that** the one or more processing circuits are configured to collect the set of samples by, for each set of samples, de-spreading chip samples equalized according to the corresponding set of equalizer weights for a plurality of traffic data symbols.

**10.** The wireless communication receiver (200,300) of claim 9, wherein the one or more processing circuits are configured to measure impairment covariance associated with the received multi-stream MIMO signal by calculating the measured impairment covariance from a plurality of de-spread pilot symbol values.

**11.** The wireless communication receiver (200,300) of claim 9, **characterized in that** the one or more processing circuits are further configured to calculate code-reuse interference associated with the first stream of the received multi stream precoded MIMO signal as a function of the scaling factor and the effective net channel response corresponding to the first stream.

12. The wireless communication receiver (200,300) of claim 11, **characterized in that** the one or more processing circuits are further configured to:

compute a second scaling factor for a second stream of the received multi-stream MIMO signal, as a function of the measured impairment covariance, the effective net channel responses for the first and second streams, and the first and second sample variances; and
calculate code-reuse interference associated with said second stream as a function of the scaling factor and the effective net channel response corresponding to the second stream.

**Patentansprüche**

1. Verfahren zum Schätzen eines Skalierungsfaktors in einem empfangenen Mehrfachstrom-Mehrfacheingabe-Mehrfachausgabe-(MIMO-)Signal für einen oder mehrere Ströme des empfangenen Mehrfachstrom-MIMO-Signals, wobei das Verfahren umfasst: Messen (510) der Beeinträchtigungskovarianz, die dem empfangenen Mehrfachstrom-MIMO-Signal zugeordnet ist, **dadurch gekennzeichnet, dass** das Verfahren ferner umfasst:

Sammeln (520) einer Menge von Abtastwerten, wobei diese Menge eine Vielzahl von Abtastwerten aufweist, die empfangenen Verkehrsdatensymbolen entsprechen,
Kombinieren (530) der Menge von Abtastwerten unter Verwendung erster und zweiter Mengen von Verarbeitungswichtungsfaktoren, die jeweils effektiven Nettokanalantworten für erste und zweite Ströme des Mehrfachstrom-MIMO-Signals entsprechen, was zwei Mengen von Symbolschätzwerten ergibt;
Berechnen (540) erster und zweiter Abtastwertvarianzen, die den zwei Mengen von Symbolschätzwerten entsprechen; und
Berechnen (550) eines ersten Skalierungsfaktors für den ersten Strom des empfangenen Mehrfachstrom-MIMO-Signals als Funktion der gemessenen Beeinträchtigungskovarianz, der effektiven Nettokanalantworten für die ersten und zweiten Ströme und der ersten und zweiten Abtastwertvarianzen.

2. Verfahren nach Anspruch 1. **dadurch gekennzeichnet, dass** die Verarbeitungswichtungsfaktoren Rake-Kombinierungs-Wichtungsfaktoren sind, und ferner **dadurch gekennzeichnet, dass** das Sammeln der Menge von Abtastwerten umfasst:

Sammeln (520) eines Vektors von Entspreizungswerten für jedes aus einer Vielzahl von Verkehrsdatensymbolen; und
Kombinieren (530) der Vektoren unter Verwendung der ersten Menge von Verarbeitungswichtungsfaktoren, um die erste Menge von Symbolschätzwerten zu erlangen, und Kombinieren der Vektoren unter Verwendung der zweiten Menge von Verarbeitungswichtungsfaktoren, um die zweite Menge von Symbolschätzwerten zu erlangen.

3. Verfahren nach Anspruch 1. **dadurch gekennzeichnet, dass** die Verarbeitungswichtungsfaktoren Chipentzerrer-Wichtungsfaktoren sind, und wobei das Sammeln der Menge von Abtastwerten umfasst: für jede Menge von Abtastwerten erfolgendes Entspreizen von Chipabtastwerten, die gemäß der entsprechenden Menge von Entzerrer-Wichtungsfaktoren für eine Vielzahl von Verkehrsdatensymbolen entzerrt wurden.

4. Verfahren nach Anspruch 1, wobei das Messen der Beeinträchtigungskovarianz, die dem empfangenen Mehrfachstrom-MIMO-Signal zugeordnet ist, umfasst: Berechnen (510) der gemessenen Beeinträchtigungskovarianz aus einer Vielzahl von Entspreizungs-Pilotsymbolwerten.

5. Verfahren zum Berechnen (560) der Codewiederverwendungsstörung, die einem ersten Strom eines empfangenen Mehrfachstrom-MIMO-Signals zugeordnet ist, als Funktion eines Skalierungsfaktors und einer effektiven Nettokanalantwort, die dem ersten Strom entspricht, **dadurch gekennzeichnet, dass** der Skalierungsfaktor nach einem der Ansprüche 1 bis 4 geschätzt worden ist.

6. Verfahren nach Anspruch 5, **dadurch gekennzeichnet, dass** das Verfahren ferner umfasst:

Berechnen (550) eines zweiten Skalierungsfaktors für einen zweiten Strom des empfangenen Mehrfachstrom-MIMO-Signals als Funktion der gemessenen Beeinträchtigungskovarianz, der effektiven Nettokanalantworten für die ersten und zweiten Ströme und der ersten und zweiten Abtastwertvarianzen: und
Berechnen (560) der Codewiederverwendungsstörung, die dem zweiten Strom zugeordnet ist, als Funktion des zweiten Skalierungsfaktors und der effektiven Nettokanalantwort, die dem zweiten Strom entspricht.

7. Empfänger für drahtlose Kommunikation (200, 300), umfassend eine Funkeingangsschaltung (202, 302), die dafür konfiguriert ist, ein Mehrfachstrom-Mehrfacheingabe-Mehrfachausgabe-(MIMO-)Signal zu empfangen, und eine oder mehrere Verarbeitungsschaltungen, die dafür konfiguriert sind, die Beeinträchtigungskovarianz zu messen, die dem empfangenen Mehrfachstrom-MIMO-Signal zugeordnet ist, **dadurch gekennzeichnet, dass** die eine oder mehreren Verarbeitungsschaltungen ferner konfiguriert sind zum:

Sammeln einer Menge von Abtastwerten für empfangene Verkehrsdatensymbole, wobei diese Menge eine Vielzahl von Abtastwerten aufweist, die empfangenen Verkehrsdatensymbolen entsprechen,
Kombinieren der Menge von Abtastwerten unter Verwendung erster und zweiter Mengen von Verarbeitungswichtungsfaktoren, die jeweils effektiven Nettokanalantworten für erste und zweite Ströme des Mehrfachstrom-MIMO-Signals entsprechen, was zwei Mengen von Symbolschätzwerten ergibt;
Berechnen erster und zweiter Abtastwertvarianzen, die den zwei Mengen von Symbolschätzwerten entsprechen; und
Berechnen eines ersten Skalierungsfaktors für den ersten Strom des empfangenen Mehrfachstrom-MIMO-Signals als Funktion der gemessenen Beeinträchtigungskovarianz, der effektiven Nettokanalantworten für die ersten und zweiten Ströme und der ersten und zweiten Abtastwertvarianzen.

8. Empfänger für drahtlose Kommunikation (200. 300) nach Anspruch 7, **dadurch gekennzeichnet, dass** die Verarbeitungswichtungsfaktoren Rake-Kombinierungs-Wichtungsfaktoren sind, und ferner **dadurch gekennzeichnet, dass** die eine oder mehreren Verarbeitungsschaltungen dafür konfiguriert sind, die Menge von Abtastwerten zu sammeln durch:

Sammeln eines Vektors von Entspreizungswerten für jedes aus einer Vielzahl von Verkehrsdatensymbolen; und
Kombinieren der Vektoren unter Verwendung der ersten Menge von Rake-Kombinierungs-Wichtungsfaktoren, um die erste Menge von Abtastwerten zu erlangen, und Kombinieren der Vektoren unter Verwendung der zweiten Menge von Rake-Kombinierungs-Wichtungsfaktoren, um die zweite Menge von Abtastwerten zu erlangen.

9. Empfänger für drahtlose Kommunikation (200, 300) nach Anspruch 7, **dadurch gekennzeichnet, dass** die Verarbeitungswichtungsfaktoren Chipentzerrer-Wichtungsfaktoren sind, und ferner **dadurch gekennzeichnet, dass** die eine oder mehreren Verarbeitungsschaltungen dafür konfiguriert sind, die Menge von Abtastwerten zu sammeln durch: für jede Menge von Abtastwerten erfolgendes Entspreizen von Chipabtastwerten, die gemäß der entsprechenden Menge von Entzerrer-Wichtungsfaktoren für eine Vielzahl von Verkehrsdatensymbolen entzerrt wurden.

10. Empfänger für drahtlose Kommunikation (200, 300) nach Anspruch 9, wobei die eine oder mehreren Verarbeitungsschaltungen dafür konfiguriert sind, die Beeinträchtigungskovarianz, die dem empfangenen Mehrfachstrom-MIMO-Signal zugeordnet ist, durch Berechnen der gemessenen Beeinträchtigungskovarianz aus einer Vielzahl von Entspreizungs-Pilotsymbolwerten zu messen.

11. Empfänger für drahtlose Kommunikation (200, 300) nach Anspruch 9, **dadurch gekennzeichnet, dass** die eine oder mehreren Verarbeitungsschaltungen ferner dafür konfiguriert sind, die Codewiederverwendungsstörung, die dem ersten Strom des empfangenen vorcodierten Mehrfachstrom-MIMO-Signals zugeordnet ist, als Funktion des Skalierungsfaktors und der effektiven Nettokanalantwort, die dem ersten Strom entspricht, zu berechnen.

12. Empfänger für drahtlose Kommunikation (200, 300) nach Anspruch 11, **dadurch gekennzeichnet, dass** die eine oder mehreren Verarbeitungsschaltungen ferner konfiguriert sind zum:

Berechnen eines zweiten Skalierungsfaktors für einen zweiten Strom des empfangenen Mehrfachstrom-MIMO-Signals als Funktion der gemessenen Beeinträchtigungskovarianz, der effektiven Nettokanalantworten für die ersten und zweiten Ströme und der ersten und zweiten Abtastwertvarianzen; und
Berechnen der Codewiederverwendungsstörung, die dem zweiten Strom zugeordnet ist, als Funktion des Skalierungsfaktors und der effektiven Nettokanalantwort, die dem zweiten Strom entspricht.

**Revendications**

1. Procédé destiné à estimer un facteur de mise à l'échelle dans un signal à entrée multiple, sortie multiple (MIMO) à flux multiples reçu, d'un ou plusieurs flux du signal MIMO à flux multiples reçu, le procédé comprenant l'étape consistant à mesurer (510) la covariance de dégradation associée au signal MIMO à flux multiples reçu, **caractérisé en ce que** le procédé comprend en outre les étapes ci-dessous consistant à :

   collecter (520) un ensemble d'échantillons, lequel ensemble inclut une pluralité d'échantillons correspondant à des symboles de données de trafic reçus :

      combiner (530) l'ensemble d'échantillons en utilisant des premier et second ensembles de pondérations de traitement correspondant à des réponses de canal nettes effectives pour des premier et second flux du signal MIMO à flux multiples, respectivement, ce qui génère deux ensembles d'estimations de symbole ;
      calculer (540) des première et seconde variances d'échantillons correspondant aux deux ensembles d'estimations de symbole ; et
      calculer (550) un premier facteur de mise à l'échelle pour le premier flux du signal MIMO à flux multiples reçu, en fonction de la covariance de dégradation mesurée, des réponses de canal nettes effectives des premier et second flux, et des première et seconde variances d'échantillons.

2. Procédé selon la revendication 1. **caractérisé en ce que** les pondérations de traitement sont des pondérations de combinaison de RAKE, et en outre **caractérisé en ce que** l'étape de collecte de l'ensemble d'échantillons comprend les étapes ci-dessous consistant à :

   collecter (520) un vecteur de valeurs de désétalement pour chaque symbole d'une pluralité de symboles de données de trafic ; et
   combiner (530) lesdits vecteurs en utilisant le premier ensemble de pondérations de traitement en vue d'obtenir le premier ensemble d'estimations de symboles, et combiner lesdits vecteurs en utilisant le second ensemble de pondérations de traitement en vue d'obtenir le second ensemble d'estimations de symbole.

3. Procédé selon la revendication 1, **caractérisé en ce que** les pondérations de traitement sont des pondérations d'égaliseur de puce, et dans lequel l'étape de collecte de l'ensemble d'échantillons comprend, pour chaque ensemble d'échantillons, l'étape consistant à désétaler des échantillons de puce égalisés selon l'ensemble correspondant de pondérations d'égaliseur pour une pluralité de symboles de données de trafic.

4. Procédé selon la revendication 1, dans lequel l'étape de mesure de la covariance de dégradation associée au signal MIMO à flux multiples reçu comporte l'étape consistant à calculer (510) la covariance de dégradation mesurée à partir d'une pluralité de valeurs de symbole pilote désétalé.

5. Procédé destiné à calculer (560) un brouillage de réutilisation de code associé à un premier flux d'un signal MIMO à flux multiples reçu, en fonction d'un facteur de mise à l'échelle et d'une réponse de canal nette effective correspondant à ce premier flux, **caractérisé en ce que** le facteur de mise à l'échelle a été estimé selon l'une quelconque des revendications 1 à 4.

6. Procédé selon la revendication 5, **caractérisé en ce que** le procédé comprend en outre les étapes ci-dessous consistant à :

   calculer (550) un second facteur de mise à l'échelle pour un second flux du signal MIMO à flux multiples reçu, en fonction de la covariance de dégradation mesurée, des réponses de canal nettes effectives des premier et second flux, et des première et seconde variances d'échantillons ; et
   calculer (560) un brouillage de réutilisation de code associé audit second flux, en fonction du second facteur de mise à l'échelle et de la réponse de canal nette effective correspondant au second flux.

7. Récepteur de communication sans fil (200, 300), comportant un circuit d'extrémité frontale radio (202, 302) configuré de manière à recevoir un signal à entrée multiple, sortie multiple (MIMO) à flux multiples, et comportant un ou plusieurs circuits de traitement configurés de manière à mesurer la covariance de dégradation associée au signal MIMO à flux multiples reçu, **caractérisé en ce que** ledit un ou lesdits plusieurs circuits de traitement est/sont en outre configuré(s) de manière à :

collecter un ensemble d'échantillons pour des symboles de données de trafic reçus, lequel ensemble inclut une pluralité d'échantillons correspondant à des symboles de données de trafic reçus ;

combiner l'ensemble d'échantillons en utilisant des premier et second ensembles de pondérations de traitement correspondant à des réponses de canal nettes effectives pour des premier et second flux du signal MIMO à flux multiples, respectivement, ce qui génère deux ensembles d'estimations de symbole ;

calculer des première et seconde variances d'échantillons correspondant aux deux ensembles d'estimations de symbole ; et

calculer un premier facteur de mise à l'échelle pour le premier flux du signal MIMO à flux multiples reçu, en fonction de la covariance de dégradation mesurée, des réponses de canal nettes effectives des premier et second flux, et des première et seconde variances d'échantillons.

8. Récepteur de communication sans fil (200, 300) selon la revendication 7, **caractérisé en ce que** les pondérations de traitement sont des pondérations de combinaison de RAKE, et en outre **caractérisé en ce que** ledit un ou lesdits plusieurs circuits de traitement est/sont configuré(s) de manière à collecter l'ensemble d'échantillons :

en collectant un vecteur de valeurs de désétalement pour chaque symbole d'une pluralité de symboles de données de trafic; et

en combinant lesdits vecteurs en utilisant le premier ensemble de pondérations de combinaison RAKE en vue d'obtenir le premier ensemble d'échantillons, et en combinant lesdits vecteurs en utilisant le second ensemble de pondérations de combinaison RAKE en vue d'obtenir le second ensemble d'échantillons.

9. Récepteur de communication sans fil (200, 300) selon la revendication 7, **caractérisé en ce que** les pondérations de traitement sont des pondérations d'égaliseur de puce, et en outre **caractérisé en ce que** ledit un ou lesdits plusieurs circuits de traitement est/sont configuré(s) de manière à collecter l'ensemble d'échantillons, pour chaque ensemble d'échantillons, en désétalant des échantillons de puce égalisés selon l'ensemble correspondant de pondérations d'égaliseur pour une pluralité de symboles de données de trafic.

10. Récepteur de communication sans fil (200, 300) selon la revendication 9, dans lequel ledit un ou lesdits plusieurs circuits de traitement est/sont configuré(s) de manière à mesurer la covariance de dégradation associée au signal MIMO à flux multiples reçu en calculant la covariance de dégradation mesurée à partir d'une pluralité de valeurs de symbole pilote désétalé.

11. Récepteur de communication sans fil (200, 300) selon la revendication 9, **caractérisé en ce que** ledit un ou lesdits plusieurs circuits de traitement est/sont en outre configuré(s) de manière à calculer le brouillage de réutilisation de code associé au premier flux du signal MIMO précodé à flux multiples reçu en fonction du facteur de mise à l'échelle et de la réponse de canal nette effective correspondant au premier flux.

12. Récepteur de communication sans fil (200, 300) selon la revendication 11, **caractérisé en ce que** ledit un ou lesdits plusieurs circuits de traitement est/sont en outre configuré(s) de manière à :

calculer un second facteur de mise à l'échelle pour un second flux du signal MIMO à flux multiples reçu, en fonction de la covariance de dégradation mesurée, des réponses de canal nettes effectives des premier et second flux, et des première et seconde variances d'échantillons ; et

calculer un brouillage de réutilisation de code associé audit second flux, en fonction du facteur de mise à l'échelle et de la réponse de canal nette effective correspondant au second flux.

FIG. 1

EP 2 245 752 B1

*FIG. 2*

**FIG. 3**

EP 2 245 752 B1

**FIG. 4**

MEASURE SIGNAL IMPAIRMENT,
USING PILOT SYMBOLS ⌐ 510

COLLECT DE-SPREAD TRAFFIC DATA SAMPLES
FROM RAKE FINGERS ⌐ 520

COMBINE TRAFFIC DATA SAMPLES, USING
FIRST AND SECOND COMBINING-WEIGHT
SETS, TO OBTAIN FIRST AND SECOND
SYMBOL ESTIMATE SETS ⌐ 530

CALCULATE FIRST AND SECOND SAMPLE
VARIANCES FROM FIRST AND SECOND
SYMBOL ESTIMATE SETS ⌐ 540

COMPUTE PER-CODE ENERGIES FROM
FIRST AND SECOND SAMPLE VARIANCES,
MEASURED IMPAIRMENT, AND EFFECTIVE
NET CHANNEL RESPONSE ⌐ 550

CALCULATE CODE-REUSE INTERFERENCE
FOR EACH DATA STREAM OF DUAL-STREAM
MIMO SIGNAL, USING PER-CODE ENERGIES ⌐ 560

**FIG. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 036323 A
- WO 2006132593 A

- US 12036368 B